# EUROPÄISCHE PATENTANMELDUNG

(11) **EP 3 799 295 A1**
(43) Veröffentlichungstag der Anmeldung: **31.03.2021**
(21) Anmeldenummer: 19200374.7
(22) Anmeldetag: 30.09.2019
(51) Int. Cl.: H02P 27/06, H02M 7/48, H02H 1/00, H02P 3/22

(54) **SCHUTZVORRICHTUNG FÜR EINEN LASTWIDERSTAND**

(71) Anmelder: Siemens Aktiengesellschaft, 80333 München (DE)
(72) Erfinder: Lange, Robert, 08451 Crimmitschau (DE); Seja, Marco, 09661 Rossau / OT Seifersbach (DE)

(57) **Zusammenfassung**

Die Erfindung betrifft eine Schutzvorrichtung (1) zum Betrieb einer elektrischen Maschine (33) an einem Umrichter (3), umfassend einen ersten und zweiten Leiter (4,5) eines Gleichspannungszwischenkreises (2), eine Schaltvorrichtung (6) mit einem ersten und einem zweiten Schalter (7,8), einen Zwischenkreiskondensator (9), einen Lastwiderstand (10) als Vorlade- und Bremswiderstand, einen Halbleiterschalter (11) und eine elektrische Sicherung (12) zum Schutz des Lastwiderstands (10), wobei die elektrische Sicherung (12) und der erste Schalter (7) als Reihenschaltung einerseits mit dem ersten Leiter (4) und andererseits mit einem ersten Widerstandsanschluss (13) des Lastwiderstands (10) und einem ersten Leistungsanschluss (14) des Halbleiterschalters (11) elektrisch verbunden sind, wobei der zweite Schalter (8) einerseits mit dem ersten Leiter (4) und andererseits mit einem ersten Kondensatoranschluss (15) des Zwischenkreiskondensator (9) und einem zweiten Widerstandsanschluss (16) des Lastwiderstands (10) elektrisch verbunden ist und wobei der Halbleiterschalter (11) mittels eines zweiten Leistungsanschlusses (17) und der Zwischenkreiskondensator (9) mittels eines zweiten Kondensatoranschlusses (18) jeweils mit dem zweiten Leiter (5) elektrisch verbunden sind. Ferner betrifft die Erfindung ein Verfahren (42) für den Betrieb der Schutzvorrichtung (1) und einen Umrichter (3) mit der Schutzvorrichtung (1) .

## Beschreibung

Die Erfindung betrifft eine Schutzvorrichtung für einen Betrieb einer elektrischen Maschine an einem Umrichter, wobei die Schutzvorrichtung einen Lastwiderstand schützt, welcher beim generatorischen Bremsen mittels eines Halbleiterschalters als Bremswiderstand betreibbar ist und welcher als Vorladewiderstand zur Vorladung eines Zwischenkreiskondensators an einem Gleichspannungszwischenkreis einsetzbar ist.

Elektrische Umrichter, welche insbesondere auch im industriellen Umfeld in sicherheitsrelevanten Antriebssystemen zum Einsatz kommen, müssen im Fehlerfall einen sicheren Betriebszustand einnehmen und dürfen erst dann wieder in Betrieb gehen, wenn der Fehler behoben ist.

Nicht jeder Umrichter ist bauartbedingt oder bedingt durch Netzvorgaben des elektrischen Versorgungsnetzes in der Lage, elektrische Energie, welche von einer vom Umrichter betriebenen elektrischen Maschine während beispielsweise ihres Bremsbetriebs generatorisch erzeugt wird, in ein elektrisches Netz zurückspeisen.

Um diese generatorisch erzeugte überschüssige elektrische Energie ohne Schaden für den Umrichter zu neutralisieren, kommt im Allgemeinen ein Bremswiderstand am Gleichspannungszwischenkreis des Umrichters zum Einsatz. Dieser Bremswiderstand setzt elektrische Energie in Wärmeenergie um, welche vom Bremswiderstand an die Umgebung abgegeben wird.

Soll die volle Rückspeiseleistung während des Bremsbetriebes durch den Bremswiderstand aufgenommen und in Wärmeenergie umgesetzt werden, kann der Bremswiderstand aufgrund geforderter Leistungsdaten entsprechend ausgelegt werden. Dies ist jedoch eine sehr kostenintensive und bauraumfordernde Lösung mit Blick auf den Bremswiderstand.

Eine weitere bekannt Lösung ist, dass der Bremswiderstand die überschüssige elektrische Energie dosiert mittels eines getakteten Halbleiterschalters aufnehmen und diese elektrische Energie für den Bremswiderstand schonend in Wärmeenergie umwandeln kann. Eine Dosierung der Umwandlung von elektrischer Energie in Wärmeenergie wird daher angewandt, um den Bremswiderstand nicht zu überlasten und vor Zerstörung zu bewahren. Diese Lösung ist auch bekannt als Bremswiderstand mit einem Bremschopper (hier ein Halbleiterschalter).

Im Betrieb des getaktet angesteuerten Halbleiterschalter, zum dosierten Steuern des Bremswiderstandes zur Aufnahme und Umsetzung der generatorisch erzeugten elektrischen Energie in Wärmeenergie, kann in einem Fehlerfall der Halbleiterschalter durchlegieren. Das bedeutet, dass der Halbleiterschalter trotz Öffnungsbefehl seine Drain-Source-Strecke oder Kollektor-Emitter-Strecke, also der Leistungsstrecke, dauerhaft geschlossen bleibt. Demnach liegt dann ein unbeabsichtigt anstehender Kurzschluss am Halbleiterschalter vor.

Da mit dem Vorliegen oder Erwarten eines unbeabsichtigt anstehenden Kurzschlusses am Halbleiterschalter eine dosierte Aufnahme von elektrischer Energie durch den Bremswiderstand nicht mehr möglich ist, führt dieser Fehler im Allgemeinen zu einer massiven, zerstörerischen Wärmeentwicklung am Bremswiderstand. Dies ist verbunden mit entsprechenden Gefahren für Maschinen und Menschen. Nach einer derartigen Wärmeentwicklung ist der Bremswiderstand meist zerstört und ein neuer, auch bei dieser Lösung noch sehr kostenintensiver Bremswiderstand wird erforderlich.

Oftmals hat der Bremswiderstand in Umrichtern auch die Aufgabe, als Vorladewiderstand einen Zwischenkreiskondensator am Gleichspanungszwischenkreis dosiert vorzuladen, um den Zwischenkreiskondensator während des Vorladevorgangs nicht zu zerstören. Der Schutz des Bremswiderstands dient demnach auch dem Schutz in seiner Funktion als Vorladewiderstand.

Da der Bremswiderstand sowohl in seiner Funktion des elektrischen Bremsens wie auch in seiner Funktion als Vorladewiderstand eine elektrische Last ist, wird an dieser Stelle der Begriff Lastwiderstand eingeführt, welcher auch für die Kombination der Funktion von Bremswiderstand und Vorladewiderstand verwendet wird.

Der Erfindung liegt daher die Aufgabe zugrunde, eine Schutzvorrichtung, ein Verfahren für die Schutzvorrichtung und einen Umrichter mit der Schutzvorrichtung vorzuschlagen, mittels denen ein im Betrieb als Brems- und Vorladewiderstand eingesetzter Lastwiderstand gegenüber bekannten Lösungen besser vor Beschädigung oder Zerstörung geschützt ist.

Die Aufgabe wird durch eine Schutzvorrichtung mit den in Anspruch 1 angegebenen Merkmalen, durch ein Verfahren zum Betrieb der Schutzvorrichtung nach den in Anspruch 9 angegebenen Merkmalen sowie durch einen Umrichter mit der Schutzvorrichtung und dem Verfahren zu deren Betrieb nach den in Anspruch 15 angegebenen Merkmalen gelöst.

Für die Lösung der Aufgabe wird eine Schutzvorrichtung zum Betrieb einer elektrischen Maschine an einem Umrichter vorgeschlagen, welche einen ersten und zweiten Leiter eines Gleichspannungszwischenkreises, eine Schaltvorrichtung mit einem ersten und einem zweiten Schalter, einen Zwischenkreiskondensator, einen Lastwiderstand als Vorlade- und Bremswiderstand, einen Halbleiterschalter und eine elektrische Sicherung zum Schutz des Lastwiderstands umfasst, wobei die elektrische Sicherung und der erste Schalter als Reihenschaltung einerseits mit dem ersten Leiter und andererseits mit einem ersten Widerstandsanschluss des Lastwiderstands und einem ersten Leistungsanschluss des Halbleiterschalters elektrisch verbunden sind, wobei der zweite Schalter einerseits mit dem ersten Leiter und andererseits mit einem ersten Kondensatoranschluss des Zwischenkreiskondensator und einem zweiten Widerstandsanschluss des Lastwiderstands elektrisch verbunden ist und wobei der Halbleiterschalter mittels eines zweiten Leistungsanschlusses und der Zwischenkreiskondensator mittels eines zweiten Kondensatoranschlusses jeweils mit dem zweiten Leiter elektrisch verbunden sind.

Die Schutzvorrichtung kommt vorteilhaft zum Einsatz, wenn der Lastwiderstand sowohl für ein elektrisches Bremsen, also der Energieumwandlung von generatorisch erzeugter elektrischer Energie in Wärmeenergie mittels des Halbleiterschalters (des Bremschoppers), wie auch für das Vorladen des Zwischenkreiskondensators am Gleichspannungszwischenkreis vorgesehen ist.

Im fehlerfreien generatorischen oder motorischen Betrieb des Umrichters ist die Schutzvorrichtung aktiv. Die elektrische Sicherung ist als Schutzelement für den Lastwiderstand so angeordnet und die Schutzvorrichtung so ausgebildet, dass beim Erkennen eines unbeabsichtigt anstehenden Kurzschlusses am Halbleiterschalter eine Auslösung der elektrischen Sicherung zwangsgeführt erfolgt, wobei danach keine elektrische Energie mehr durch den Lastwiderstand fließen kann und dieser somit vor Zerstörung geschützt wird.

Wie bereits erwähnt, kann mittels der Schutzvorrichtung, insbesondere mittels des Lastwiderstandes der Schutzvorrichtung auch die Vorladung des Zwischenkreiskondensators in vorteilhafter kombinatorischer Weise erfolgen, wobei auch in diesem Betriebszustand die Schutzvorrichtung aktiv sein kann und beim Erkennen des durchlegierten Halbleiterschalters eine Auslösung der elektrischen Sicherung zwangsgeführt erfolgen kann.

Vorteilhafte Ausgestaltungsformen der Schutzvorrichtung sind in den abhängigen Ansprüchen angegeben.

Bei einer ersten vorteilhaften Ausgestaltungsform der Schutzvorrichtung bilden der erste Schalter und der zweite Schalter eine Wechselschaltung aus und ist der erste Schalter dann geschlossen, wenn der zweite Schalter geöffnet ist, oder ist der erste Schalter dann geöffnet, wenn der zweite Schalter geschlossen ist.

Hier wird in vorteilhafter Weise sichergestellt, dass bei Ansteuerung der Schalter beide Schalter einen klar definierten Schaltzustand einnehmen, wobei insbesondere beim Auslösen der elektrischen Sicherung der Zwischenkreiskondensator nicht weiter mit elektrischer Energie versorgt wird und sich entladen kann.

Bei einer weiteren vorteilhaften Ausgestaltungsform der Schutzvorrichtung ist eine Steuerung umfasst, wobei mittels eines von der Steuerung erzeugbaren Schaltbefehls der erste Schalter und der zweite Schalter schaltbar sind.

Die Steuerung übernimmt in vorteilhafter Weise mittels des Steuerbefehls die sichere Ansteuerung der Schalter, wobei die Steuerung das Vorliegen oder Erwarten des unbeabsichtigt anstehenden Kurzschlusses am Halbleiterschalter ermittelten und mittels Ausgebens des Schaltbefehls an die Schalter das Auslösen der Sicherung zum Schutz des Lastwiderstandes durchführen kann.

Bei einer weiteren vorteilhaften Ausgestaltungsform der Schutzvorrichtung ist eine erste Temperaturerfassung umfasst, welche am Lastwiderstand angeordnet ist, wobei mittels der ersten Temperaturerfassung eine Widerstandstemperatur des Lastwiderstandes erfassbar und als erstes Temperatursignal an die Steuerung übertragbar ist.

Die ermittelte Widerstandstemperatur des Lastwiderstandes ist in vorteilhafter Weise ein Maß dafür, ob der Lastwiderstand noch betreibbar ist oder die Widerstandstemperatur für den sicheren Betrieb des Lastwiderstandes zu hoch ist, wobei diese Information der Steuerung mittels des ersten Temperatursignal zur Prüfung auf das mögliche Vorliegen oder Erwarten des unbeabsichtigt anstehenden Kurzschlusses am Halbleiterschalter zur Verfügung gestellt wird.

Bei einer weiteren vorteilhaften Ausgestaltungsform der Schutzvorrichtung ist eine zweite Temperaturerfassung umfasst, welche am Halbleiterschalter angeordnet ist, wobei mittels der zweiten Temperaturerfassung eine Halbleitertemperatur des Halbleiterschalters erfassbar und als zweites Temperatursignal an die Steuerung übertragbar ist.

Die ermittelte Halbleitertemperatur des Halbleiterschalter kann in vorteilhafter Weise ein Maß dafür sein, ob der Halbleiterschalter noch betreibbar ist oder für den sicheren Betrieb des Lastwiderstandes eine Gefahr darstellt, wobei diese Information der Steuerung mittels des zweiten Temperatursignal zur Prüfung auf das mögliche Vorliegen oder Erwarten des unbeabsichtigt anstehenden Kurzschlusses am Halbleiterschalter zur Verfügung gestellt wird.

Bei einer weiteren vorteilhaften Ausgestaltungsform der Schutzvorrichtung ist eine Spannungserfassung umfasst, welche elektrisch in Reihe mit dem ersten Leistungsanschluss des Halbleiterschalters oder in Reihe mit dem zweiten Leistungsanschluss des Halbleiterschalters verbunden ist, wobei mittels der Spannungserfassung eine Halbleiterausgangsspannung des Halbleiterschalters erfassbar und als Spannungssignal an die Steuerung übertragbar ist.

Die ermittelte Halbleiterausgangsspannung (über Drain-Source-Anschlüsse oder Kollektor-Emitter-Anschlüsse) des Halbleiterschalter kann in vorteilhafter Weise ein Maß dafür sein, ob der Halbleiterschalter noch betreibbar ist oder für den sicheren Betrieb des Lastwiderstandes eine Gefahr darstellt, wobei diese Information der Steuerung mittels des Spannungssignals zur Prüfung auf das mögliche Vorliegen oder Erwarten des unbeabsichtigt anstehenden Kurzschlusses am Halbleiterschalter zur Verfügung gestellt wird.

Bei einer weiteren vorteilhaften Ausgestaltungsform der Schutzvorrichtung ist eine Stromerfassung umfasst, welche elektrisch zwischen dem ersten Leistungsanschluss des Halbleiterschalters und dem zweiten Widerstandsanschluss des Lastwiderstand oder zwischen dem zweiten Leistungsanschluss des Halbleiterschalters und dem zweiten Leiter des Gleichspannungszwischenkreises verbunden ist, wobei mittels der Stromerfassung ein Halbleiterausgangsstrom des Halbleiterschalters erfassbar und als Stromsignal an die Steuerung übertragbar ist.

Der ermittelte Halbleiterausgangsstrom (in der Drain-Source-Strecke oder der Kollektor-Emitter-Strecke) des Halbleiterschalter kann in vorteilhafter Weise ein Maß dafür sein, ob der Halbleiterschalter noch betreibbar ist oder für den sicheren Betrieb des Lastwiderstandes eine Gefahr darstellt, wobei diese Information der Steuerung mittels des Stromsignals zur Prüfung auf das mögliche Vorliegen oder Erwarten des unbeabsichtigt anstehenden Kurzschlusses am Halbleiterschalter zur Verfügung gestellt wird.

Bei einer weiteren vorteilhaften Ausgestaltungsform der Schutzvorrichtung ist eine Ansteuererfassung umfasst, wobei mittels der Ansteuererfassung ein Ansteuerbefehl für einen Steueranschluss des Halbleiterschalters erfassbar und als Ansteuersignal an die Steuerung übertragbar ist.

Der Ansteuerbefehl für den Steueranschluss (das Gate) des Halbleiterschalters, also der Status, ob ein Öffnungsbefehl oder ein Schließbefehl am Halbleiterschalter ansteht, kann in vorteilhafter Weise, insbesondere gemeinsam mit der Information über die Halbleiterausgangsspannung und/oder der Information über den Halbleiterausgangsstrom, ein Maß dafür sein, ob der Halbleiterschalter noch betreibbar ist oder für den sicheren Betrieb des Lastwiderstandes eine Gefahr darstellt, wobei diese Information der Steuerung mittels des Ansteuersignals zur Prüfung auf das mögliche Vorliegen oder Erwarten des unbeabsichtigt anstehenden Kurzschlusses am Halbleiterschalter zur Verfügung gestellt wird.

Für die Lösung der Aufgabe wird weiterhin ein Verfahren zum Betrieb einer erfindungsgemäßen Schutzvorrichtung vorgeschlagen, wobei in einem fehlerfreien generatorischen Betrieb eines Umrichters, beim Bremsen einer elektrischen Maschine mittels des Lastwiderstands und des Halbleiterschalters, oder in einem fehlerfreien motorischen Betrieb des Umrichters, beim Antreiben der elektrischen Maschine mittels des Zwischenkreiskondensators, der erste Schalter der Schaltvorrichtung geöffnet und der zweite Schalter der Schaltvorrichtung geschlossen ist, wobei in einem Prüfbetrieb der Halbleiterschalter auf einem Vorliegen oder Erwarten eines unbeabsichtigt anstehenden Kurzschlusses geprüft wird, wobei in einem Fehlerbetrieb bei Vorliegen oder Erwarten des unbeabsichtigt anstehenden Kurzschlusses des Halbleiterschalter der erste Schalter geschlossen und der zweite Schalter geöffnet wird und wobei in einem Schutzbetrieb die elektrische Sicherung zum Schutz des Lastwiderstandes auslöst.

Ausgehend von einem jeweils fehlerfreien generatorischen oder motorischen Betrieb des Umrichters, bei dem der erste Schalter geöffnet und der zweite Schalter geschlossen ist, erfolgt in vorteilhafter Art des Verfahrens der Prüfbetrieb, parallel zu fehlerfreien generatorischen oder motorischen Betrieb. Das Vorliegen oder Erwarten des unbeabsichtigt anstehenden Kurzschlusses führt zu dem Fehlerbetrieb. Mit dem Erwarten des unbeabsichtigt anstehenden Kurzschlusses ist gemeint, dass dieser unbeabsichtigt anstehende Kurzschluss bevorsteht, soweit der generatorische oder motorische Betrieb so weitergeführt wird.

Im Fehlerbetrieb erfolgt das Schalten der Schalter als aktive Aktion, wobei in Folge des Schließens des ersten Schalters geschlossen und des Öffnens des zweiten Schalters im Schutzbetrieb die elektrische Sicherung zum Schutz des Lastwiderstandes auslöst und mittels der Schutzvorrichtung für den Umrichter ein sicherer Betriebszustand hergestellt wird.

Bei einer ersten vorteilhaften Ausgestaltungsform des Verfahrens erfolgt das Schalten der Schalter bei Vorliegen oder Erwarten des unbeabsichtigt anstehenden Kurzschlusses mittels des Schaltbefehls von der Steuerung und wird ein Auslösesignal für das Auslösen der elektrischen Sicherung erzeugt.

Bei einer weiteren vorteilhaften Ausgestaltungsform des Verfahrens wird das Vorliegen oder Erwarten des unbeabsichtigt anstehenden Kurzschlusses von der Steuerung auf Basis der Widerstandstemperatur des Lastwiderstandes ermittelt.

Die Widerstandstemperatur des Lastwiderstandes ist ein Maß dafür, ob der Lastwiderstand noch betreibbar ist oder die Widerstandstemperatur für den sicheren Betrieb des Lastwiderstandes zu hoch ist. Die Steuerung ermittelt daher mittels der Widerstandstemperatur in vorteilhafter Weise das Vorliegen oder Erwarten des unbeabsichtigt anstehenden Kurzschlusses und ob der Schutz des Lastwiderstandes mittels der elektrischen Sicherung aktiviert werden muss.

Bei einer weiteren vorteilhaften Ausgestaltungsform des Verfahrens wird das Vorliegen oder Erwarten des unbeabsichtigt anstehenden Kurzschlusses von der Steuerung auf Basis der Halbleitertemperatur des Halbleiterschalters ermittelt.

Die Halbleitertemperatur des Halbleiterschalters ist ein Maß dafür, ob der Halbleiterschalter noch betreibbar ist oder eine Gefahr für den sicheren Betrieb des Lastwiderstandes darstellt. Die Steuerung ermittelt daher mittels der Halbleitertemperatur in vorteilhafter Weise das Vorliegen oder Erwarten des unbeabsichtigt anstehenden Kurzschlusses und ob der Schutz des Lastwiderstandes mittels der elektrischen Sicherung aktiviert werden muss.

Bei einer weiteren vorteilhaften Ausgestaltungsform des Verfahrens wird das Vorliegen oder Erwarten des unbeabsichtigt anstehenden Kurzschlusses von der Steuerung auf Basis des Ansteuerbefehls für den Steueranschluss des Halbleiterschalters und der Halbleiterausgangsspannung des Halbleiterschalters ermittelt.

Die Halbleiterausgangsspannung des Halbleiterschalters ist ein Maß dafür, ob der Halbleiterschalter noch betreibbar ist oder eine Gefahr für den sicheren Betrieb des Lastwiderstandes darstellt. Die Steuerung ermittelt daher mittels der Halbleiterausgangsspannung und des Ansteuerbefehls für den Steueranschluss des Halbleiterschalters in vorteilhafter Weise das Vorliegen oder Erwarten des unbeabsichtigt anstehenden Kurzschlusses und ob der Schutz des Lastwiderstandes mittels der elektrischen Sicherung aktiviert werden muss.

Bei einer weiteren vorteilhaften Ausgestaltungsform des Verfahrens wird das Vorliegen oder Erwarten des unbeabsichtigt anstehenden Kurzschlusses von der Steuerung auf Basis des Ansteuerbefehls für den Steueranschluss des Halbleiterschalters und dem Halbleiterausgangsstrom des Halbleiterschalters ermittelt.

Der Halbleiterausgangsstrom des Halbleiterschalters ist ein Maß dafür, ob der Halbleiterschalter noch betreibbar ist oder eine Gefahr für den sicheren Betrieb des Lastwiderstandes darstellt. Die Steuerung ermittelt daher mittels des Halbleiterausgangsstroms und des Ansteuerbefehls für den Steueranschluss des Halbleiterschalters in vorteilhafter Weise das Vorliegen oder Erwarten des unbeabsichtigt anstehenden Kurzschlusses und ob der Schutz des Lastwiderstandes mittels der elektrischen Sicherung aktiviert werden muss.

Für die Lösung der Aufgabe wird ebenfalls ein Umrichter mit einer erfindungsgemäßen Schutzvorrichtung vorgeschlagen, wobei die Schutzvorrichtung mit einem erfindungsgemäßen Verfahren betreibbar ist, wobei mittels des Umrichters die elektrisehe Maschine an einem elektrischen Netz betreibbar ist, und wobei im Schutzbetrieb der generatorische oder motorische Betrieb des Umrichters und das Vorladen des Zwischenkreiskondensators des Umrichters mittels der Schutzvorrichtung nach Auslösung der elektrischen Sicherung blockierbar ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine erste schematische Darstellung einer erfindungsgemäßen Schutzvorrichtung,
- FIG 2: eine zweite schematische Darstellung der Schutzvorrichtung nach FIG 1 mit einer Steuerung,
- FIG 3: ein Struktogramm eines Verfahrens für den Betrieb der Schutzvorrichtung nach FIG 1 oder FIG 2 und
- FIG 4: eine schematische Darstellung eines Umrichters mit einer Schutzvorrichtung und einem Verfahren für die Schutzvorrichtung, wobei mittels des Umrichters eine elektrische Maschine an einem elektrischen Netz betreibbar ist.

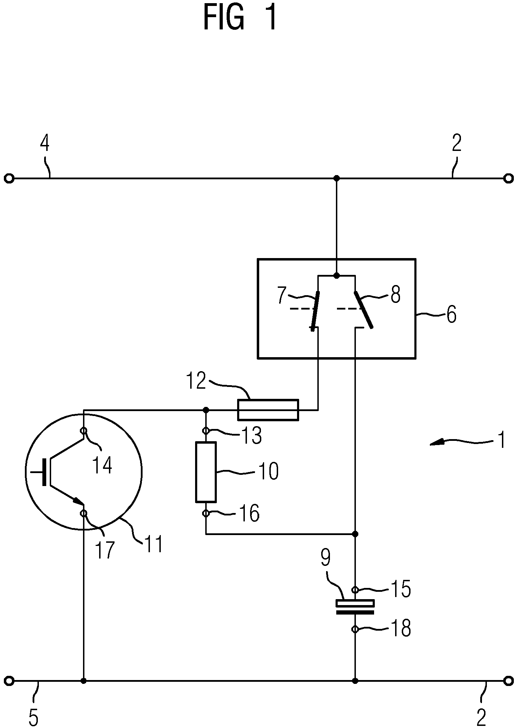

Die FIG 1 zeigt eine erste schematische Darstellung einer erfindungsgemäßen Schutzvorrichtung 1.

Ein Gleichspannungszwischenkreis 2 weist einen ersten Leiter 4 und einen zweiten Leiter 5 auf.

Eine elektrische Sicherung 12 und ein erster Schalter 7 einer Schaltvorrichtung 6 sind als Reihenschaltung einerseits mit dem ersten Leiter 4 und andererseits mit einem ersten Widerstandsanschluss 13 eines Lastwiderstands 10 und einem ersten Leistungsanschluss 14 eines Halbleiterschalters 11 elektrisch verbunden.

Ein zweiter Schalter 8 ist einerseits mit dem ersten Leiter 4 und andererseits mit einem ersten Kondensatoranschluss 15 eines Zwischenkreiskondensator 9 und einem zweiten Widerstandsanschluss 16 des Lastwiderstands 10 elektrisch verbunden.

Der Halbleiterschalter 11 ist mittels eines zweiten Leistungsanschlusses 17 mit dem zweiten Leiter 5 und der Zwischenkreiskondensator 9 mittels eines zweiten Kondensatoranschlusses 18 mit dem zweiten Leiter 5 elektrisch verbunden.

Zum Vorladen des Zwischenkreiskondensators 9 ist, wie in FIG 1 dargestellt, der erster Schalter 7 der Schaltvorrichtung 6 geschlossen und der zweite Schalter 8 der Schaltvorrichtung 6 geöffnet. Der Zwischenkreiskondensators 9 über Gleichspannungszwischenkreis 2, den ersten Leiter 4, den geschlossenen ersten Schalter 7, die elektrische Sicherung 12, den Lastwiderstand 10, den Zwischenkreiskondensator 9 und den zweiten Leiter 5 vorgeladen werden.

Im Falle eines generatorischen oder motorischen Betriebs der Schutzvorrichtung 1 ist der der erster Schalter 7 der Schaltvorrichtung 6 geöffnet und der zweite Schalter 8 der Schaltvorrichtung 6 geschlossen (Schaltzustände in FIG 1 so nicht dargestellt). Im generatorischen Betrieb kann die elektrische Energie aus dem Gleichspannungszwischenkreis 2 über den ersten Leiter 4, den geschlossenen zweiten Schalter 8 (geschlossener Schaltzustand in FIG 1 so nicht dargestellt), den Lastwiderstand 10, den Halbleiterschalter 11 und den zweiten Leiter 5 mittels des Lastwiderstandes 10 und den Halbleiterschalter 11 am Lastwiderstand 10 in Wärmeenergie umgewandelt werden.

Auch ist es möglich, elektrische Energie im generatorischen Betrieb auch in den Zwischenkreiskondensator 9 einspeisen, soweit seine Ladekapazität dies noch ermöglich, was über den ersten Leiter 4, den geschlossenen zweiten Schalter 8 (geschlossener Schaltzustand in FIG 1 nicht dargestellt), den zu ladenden Zwischenkreiskondensator 9 und den zweiten Leiter 5 erfolgt.

Der motorische Betrieb der Schutzvorrichtung 1 erfolgt ebenfalls über den geschlossenen zweiten Schalter 8 (geschlossener Schaltzustand in FIG 1 nicht dargestellt). Der so mit dem Gleichspannungszwischenkreis 2 elektrisch verbundene Zwischenkreiskondensator 9 sorgt dann u.a. für eine möglichst in konstanter Höhe anliegende und geglättete Gleichspannung.

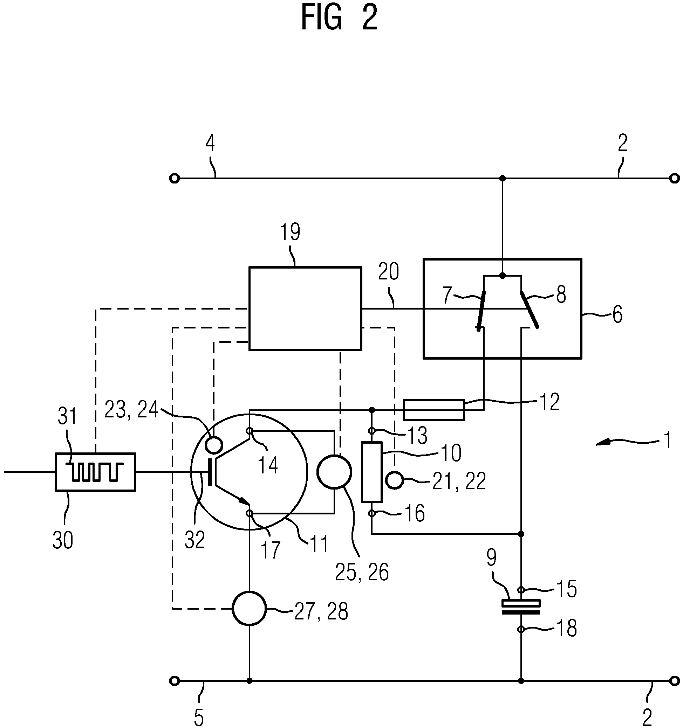

In FIG 2 wird eine zweite schematische Darstellung der Schutzvorrichtung 1 nach FIG 1 dargestellt.

Eine Steuerung 19 kann einen Steuerbefehl 20 erzeugen, mittels dem der erste Schalter 7 und der zweite Schalter 8 der Schaltvorrichtung 6 geschaltet werden können.

Mittels einer erste Temperaturerfassung 21 ist eine Widerstandstemperatur 22 des Lastwiderstandes 10 erfassbar und als erstes Temperatursignal an die Steuerung 20 übertragbar.

Mittels einer zweiten Temperaturerfassung 23 ist eine Halbleitertemperatur 24 des Halbleiterschalter 11 erfassbar und als zweites Temperatursignal an die Steuerung 20 übertragbar.

Mittels einer Spannungserfassung 25, angeschlossen an einem ersten und einem zweiten Leistungsanschluss 14,17 des Halbleiterschalters 11, ist eine Halbleiterausgangsspannung 26 des Halbleiterschalters 11 erfassbar und als Spannungssignal an die Steuerung 20 übertragbar.

Mittels einer Stromerfassung 27, welche elektrisch in Reihe mit dem ersten Leistungsanschluss 14 des Halbleiterschalters 11, zwischen dem ersten Leistungsanschluss 14 des Halbleiterschalters 11 und dem zweiten Leiter 5 verbunden ist, ist eine Halbleiterausgangsspannung 26 des Halbleiterschalters 11 erfassbar und als Spannungssignal an die Steuerung 20 übertragbar.

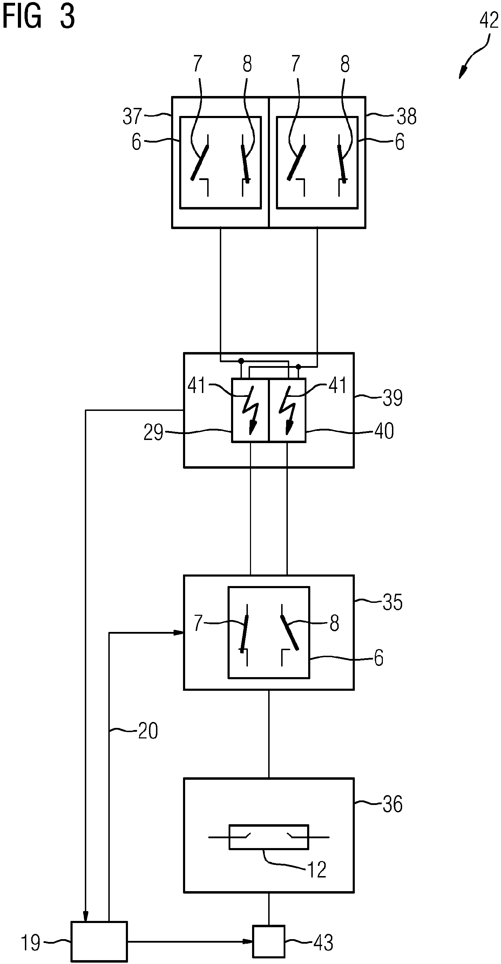

In FIG 3 ist ein Struktogramm eines Verfahrens 42 für den Betrieb der Schutzvorrichtung 1 nach FIG 1 oder FIG 2 dargestellt.

In einem fehlerfreien generatorischen Betrieb 37 eines Umrichters, beim Bremsen einer elektrischen Maschine mittels des Lastwiderstands und des Halbleiterschalters oder in einem fehlerfreien motorischen Betrieb 38 des Umrichters, beim Antreiben der elektrischen Maschine mittels des Zwischenkreiskondensators, ist jeweils der erste Schalter 7 der Schaltvorrichtung 6 geöffnet und der zweite Schalter 8 der Schaltvorrichtung 6 geschlossen ist.

In einem Prüfbetrieb 39 wird der Halbleiterschalter 11 sowohl im generatorischen Betrieb 37 wie auch im motorischen Betrieb 38 auf einem Vorliegen 40 oder Erwarten 29 eines unbeabsichtigt anstehenden Kurzschlusses 41 geprüft.

In einem Fehlerbetrieb 35 bei Vorliegen 40 oder Erwarten 29 des unbeabsichtigt anstehenden Kurzschlusses 41 des Halbleiterschalter 11 wird der erste Schalter 7 geschlossen und der zweite Schalter 8 geöffnet wird.

In einem Schutzbetrieb 36 wird die elektrische Sicherung 12 zum Schutz des Lastwiderstandes auslöst.

Das Schalten der Schalter 7,8 erfolgt, bei Vorliegen 40 oder Erwarten 29 des unbeabsichtigt anstehenden Kurzschlusses 41 mittels des Schaltbefehls 20 von der Steuerung 19. Ein Auslösesignal 43 für das Auslösen der elektrischen Sicherung 7 wird von der Steuerung 19 erzeugt.

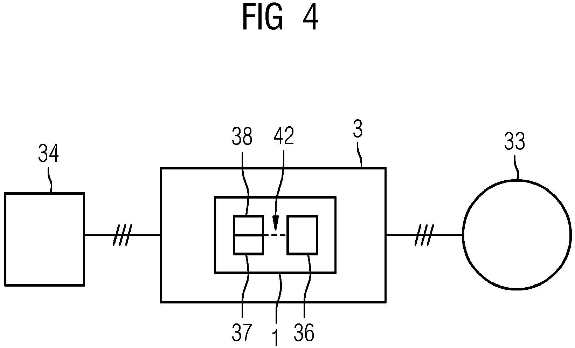

Mit FIG 4 wird eine schematische Darstellung eines Umrichters 3 mit einer Schutzvorrichtung 1 und einem Verfahren 42 für die Schutzvorrichtung 1 visualisiert.

Mittels des Umrichters 3 ist eine elektrische Maschine 33 an einem elektrischen Netz 34 betreibbar. Die elektrischen Verbindungen des Umrichters mit dem elektrischen Netz 34 und der elektrischen Maschine 33 sind hier beispielhaft mittels dreiphasiger Leitersysteme dargestellt.

Im Schutzbetrieb 36 ist der generatorische oder motorische Betrieb 37,38 des Umrichters 3 und das Vorladen des Zwischenkreiskondensators des Umrichters mittels der Schutzvorrichtung 1 nach Auslösung der elektrischen Sicherung 12 blockierbar ist.

## Patentansprüche

1. Schutzvorrichtung (1) zum Betrieb einer elektrischen Maschine (33) an einem Umrichter (3), umfassend
- einen ersten und zweiten Leiter (4,5) eines Gleichspannungszwischenkreises (2),
- eine Schaltvorrichtung (6) mit einem ersten und einem zweiten Schalter (7,8),
- einen Zwischenkreiskondensator (9),
- einen Lastwiderstand (10) als Vorlade- und Bremswiderstand,
- einen Halbleiterschalter (11) und
- eine elektrische Sicherung (12) zum Schutz des Lastwiderstands (10), wobei
- die elektrische Sicherung (12) und der erste Schalter (7) als Reihenschaltung einerseits mit dem ersten Leiter (4) und andererseits mit einem ersten Widerstandsanschluss (13) des Lastwiderstands (10) und einem ersten Leistungsanschluss (14) des Halbleiterschalters (11) elektrisch verbunden sind,
- der zweite Schalter (8) einerseits mit dem ersten Leiter (4) und andererseits mit einem ersten Kondensatoranschluss (15) des Zwischenkreiskondensator (9) und einem zweiten Widerstandsanschluss (16) des Lastwiderstands (10) elektrisch verbunden ist und
- der Halbleiterschalter (11) mittels eines zweiten Leistungsanschlusses (17) und der Zwischenkreiskondensator (9) mittels eines zweiten Kondensatoranschlusses (18) jeweils mit dem zweiten Leiter (5) elektrisch verbunden sind.

2. Schutzvorrichtung (1) nach Anspruch 1, wobei der erste Schalter (7) und der zweite Schalter (8) eine Wechselschaltung ausbilden und wobei der erste Schalter (7) dann geschlossen ist, wenn der zweite Schalter (8) geöffnet ist, oder der erste Schalter (7) dann geöffnet ist, wenn der zweite Schalter (8) geschlossen ist.

3. Schutzvorrichtung (1) nach einem der Ansprüche 1 oder 2, umfassend eine Steuerung (19), wobei mittels eines von der Steuerung (19) erzeugbaren Steuerbefehls (20) der erste Schalter (7) und der zweite Schalter (8) schaltbar sind.

4. Schutzvorrichtung (1) nach Anspruch 3, umfassend eine erste Temperaturerfassung (21), welche am Lastwiderstand (10) angeordnet ist, wobei mittels der ersten Temperaturerfassung (21) eine Widerstandstemperatur (22) des Lastwiderstandes (10) erfassbar und als erstes Temperatursignal an die Steuerung (19) übertragbar ist.

5. Schutzvorrichtung (1) nach einem der Ansprüche 3 oder 4, umfassend eine zweite Temperaturerfassung (23), welche am Halbleiterschalter (11) angeordnet ist, wobei mittels der zweiten Temperaturerfassung (23) eine Halbleitertemperatur (24) des Halbleiterschalters (11) erfassbar und als zweites Temperatursignal an die Steuerung (19) übertragbar ist.

6. Schutzvorrichtung (1) nach einem der Ansprüche 3 bis 5, umfassend eine Spannungserfassung (25), welche elektrisch mit dem ersten Leistungsanschluss (14) und dem zweiten Leistungsanschluss (17) des Halbleiterschalters (11) verbunden ist, wobei mittels der Spannungserfassung (25) eine Halbleiterausgangsspannung (26) des Halbleiterschalters (11) erfassbar und als Spannungssignal an die Steuerung (19) übertragbar ist.

7. Schutzvorrichtung (1) nach einem der Ansprüche 3 bis 6, umfassend eine Stromerfassung (27), welche elektrisch in Reihe mit dem ersten Leistungsanschluss (14) des Halbleiterschalters (11) oder in Reihe mit dem zweiten Leistungsanschluss (17) des Halbleiterschalters (11) verbunden ist, wobei mittels der Stromerfassung (27) ein Halbleiterausgangsstrom (28) des Halbleiterschalters (11) erfassbar und als Stromsignal an die Steuerung (19) übertragbar ist.

8. Schutzvorrichtung (1) nach Anspruch 3 bis 7, umfassend eine Ansteuererfassung (30), wobei mittels der Ansteuererfassung (30) ein Ansteuerbefehl (31) für einen Steueranschluss (32) des Halbleiterschalters (11) erfassbar und als Ansteuersignal an die Steuerung (19) übertragbar ist.

9. Verfahren (42) zum Betrieb einer Schutzvorrichtung (1) nach einem der Ansprüche 1 bis 8, wobei
- in einem fehlerfreien generatorischen Betrieb (37) eines Umrichters (3), beim Bremsen einer elektrischen Maschine (33) mittels des Lastwiderstands (10) und des Halbleiterschalters (11), oder in einem fehlerfreien motorischen Betrieb (38) des Umrichters (3), beim Antreiben der elektrischen Maschine (33) mittels des Zwischenkreiskondensators (9), der erste Schalter (7) der Schaltvorrichtung (6) geöffnet und der zweite Schalter (8) der Schaltvorrichtung (6) geschlossen ist,
- in einem Prüfbetrieb (39) der Halbleiterschalter (11) auf einem Vorliegen (40) oder Erwarten (29) eines unbeabsichtigt anstehenden Kurzschlusses (41) geprüft wird,
- in einem Fehlerbetrieb (35) bei Vorliegen (40) oder Erwarten (29) des unbeabsichtigt anstehenden Kurzschlusses (41) des Halbleiterschalter (11) der erste Schalter (7) geschlossen und der zweite Schalter (8) geöffnet wird und
- in einem Schutzbetrieb (36) die elektrische Sicherung (7) zum Schutz des Lastwiderstandes 10) auslöst.

10. Verfahren (42) nach Anspruch 9, wobei das Schalten der Schalter (7,8) bei Vorliegen (40) oder Erwarten (29) des unbeabsichtigt anstehenden Kurzschlusses (41) mittels des Schaltbefehls (20) von der Steuerung (19) erfolgt und ein Auslösesignal (43) für das Auslösen der elektrischen Sicherung (7) erzeugt wird.

11. Verfahren (42) nach einem der Ansprüche 9 oder 10, wobei das Vorliegen (40) oder Erwarten (29) des unbeabsichtigt anstehenden Kurzschlusses (41) von der Steuerung (19) auf Basis der Widerstandstemperatur (22) des Lastwiderstandes (10) ermittelt wird.

12. Verfahren (42) nach einem der Ansprüche 9 bis 11, wobei das Vorliegen (40) oder Erwarten (29) des unbeabsichtigt anstehenden Kurzschlusses (41) von der Steuerung (19) auf Basis der Halbleitertemperatur (24) des Halbleiterschalters (11) ermittelt wird.

13. Verfahren (42) nach einem der Ansprüche 9 bis 12, wobei das Vorliegen (40) oder Erwarten (29) des unbeabsichtigt anstehenden Kurzschlusses (41) von der Steuerung (19) auf Basis des Ansteuerbefehls (31) für den Steueranschluss (32) des Halbleiterschalters (11) und der Halbleiterausgangsspannung (26) des Halbleiterschalters (11) ermittelt wird.

14. Verfahren (42) nach einem der Ansprüche 9 bis 13, wobei das Vorliegen (40) oder Erwarten (29) des unbeabsichtigt anstehenden Kurzschlusses (41) von der Steuerung (19) auf Basis des Ansteuerbefehls (31) für den Steueranschluss (32) des Halbleiterschalters (11) und dem Halbleiterausgangsstrom (28) des Halbleiterschalters (11) ermittelt wird.

15. Umrichter (3) mit einer Schutzvorrichtung (1) nach einem der Ansprüche 1 bis 8, wobei die Schutzvorrichtung (1) mit einem Verfahren (42) nach einem der nach einem der Ansprüche 9 bis 13 betreibbar ist, wobei mittels des Umrichters (3) die elektrische Maschine (33) an einem elektrischen Netz (34) betreibbar ist, und wobei im Schutzbetrieb (36) der generatorische oder motorische Betrieb (37,38) des Umrichters (3) und das Vorladen des Zwischenkreiskondensators (9) des Umrichters (3) mittels der Schutzvorrichtung (1) nach Auslösung der elektrischen Sicherung (12) blockierbar ist.
